# EUROPEAN PATENT APPLICATION

(11) **EP 1 248 416 A1**
(43) Date of publication of application: **09.10.2002**
(21) Application number: 01440094.9
(22) Date of filing: 04.04.2001
(51) Int. Cl.: H04L 12/56

(54) **System, and packet signal, and network-unit and method**

(71) Applicant: ALCATEL, 75008 Paris (FR)
(72) Inventor: Hofkens, Jurgen, 2870 Puurs (BE); Rijsbrack, Carl, 2050 Antwerpen (BE)
(74) Representative: Urlichs, Stefan, Dipl.-Phys.

(57) **Abstract**

Known systems comprising network-units and packet signals comprise routing-software stored in each network-unit and to be run via a processor of said network-unit for in dependence of at least network-routing-information stored in said network-unit and in dependence of said packet-routing-information originating from each packet signal calculating at least one route for said packet signal for routing it from said network-unit to a further network-unit. The flexibility of such systems can be increased a lot by locating said routing-software into said packet signal and by each time a packet signal has arrived at a network-unit, exchanging (by for example copying) said packet-routing-information and said routing-software from said packet signal to said network-unit, running said routing-software in said network-unit, and then calculating a route. In such systems, new routing-software can be introduced immediately when sending a new packet-signal, and network-units can be upgraded by just replacing their (hardware) processors.

## Description

### System, and packet signal, and network-unit and method

The invention relates to a system comprising at least one network-unit and a packet signal, with said network-unit comprising a processor and a memory for storing network-routing-information and with said packet signal comprising packet-routing-information, and with said system comprising routing-software to be run via said processor for in dependence of at least said network-routing-information and said packet-routing-information calculating at least one route for said packet signal from said network-unit to a further network-unit.

Such a system is known in general, with the network-unit being for example a switch or a router, in which the processor is used for running the routing-software for in dependence of the network-routing-information stored in the memory and the packet-routing-information originating from the packet sgnal calculating the route. This routing-software is in such a prior art system also stored in said memory.

Such a system is disadvantageous, inter alia, due to being not flexible sufficiently. In case the routing-software needs to be updated, in each network-unit updating needs to be done.

It is an object of the invention, inter alia, to provide a system described in the preamble, which is much more flexible.

Thereto, the system according to the invention is characterised in that said packet-signal comprises at least a largest part of said routing-software, with said network-unit comprising an input for receiving said at least largest part and said packet-routing-information.

By locating at least the largest part (51% or more) of said routing-software in the packet signal, each packet signal carries ist own routing-software. When arriving at a network-unit, this routing-software together with the packet-routing-information is loaded into the network-unit, where, in case of just a largest part of the routing-software being carried by the packet signal, this largest part is combined with a further part stored in the memory of the network-unit, and said routing-software is run via the processor, thereby using the packet-routing-information and the network-routing-information for making calculations for determining routes.

The invention is based on the insight, inter alia, that intelligence necessary for interacting parties can be shifted from party to party.

The invention solves the problem, inter alia, of providing (one of) the most flexible system(s) possible.

The invention further relates to a packet signal for use in a system comprising at least one network-unit and said packet signal, with said network-unit comprising a processor and a memory for storing network-routing-information and with said packet signal comprising packet-routing-information, and with said system comprising routing-software to be run via said processor for in dependence of at least said network-routing-information and said packet-routing-information calculating at least one route for said packet signal from said network-unit to a further network-unit.

The packet signal according to the invention is characterised in that said packet-signal comprises at least a largest part of said routing-software, with said network-unit comprising an input for receiving said at least largest part and said packet-routing-information.

A first embodiment of the packet signal according to the invention is characterised in that said packet-routing-information is located at a first predefined location in said packet signal, with said at least largest part of said routing-software being located at a second predefined location in said packet signal.

By locating the packet-routing-information and the routing softeware at predefined locations, the packet signal is well organised, and the interaction between packet signal and network-unit will take place efficiently.

A second embodiment of the packet signal according to the invention is characterised in that said packet signal further comprises quality information, priority information and/or classification information, each information being located at a further predefined location.

By locating these kinds of information at predefined locations, firstly the packet signal is well organised, and the interaction between packet signal and network-unit will take place efficiently, and secondly the availability of one or more of these kinds of information will make the results of the calculations more appropriate.

The invention also relates to a network-unit for use in a system comprising said network-unit and a packet signal, with said network-unit comprising a processor and a memory for storing network-routing-information and with said packet signal comprising packet-routing-information, and with said system comprising routing-software to be run via said processor for in dependence of at least said network-routing-information and said packet-routing-information calculating at least one route for said packet signal from said network-unit to a further network-unit.

The network-unit according to the invention is characterised in that said network-unit comprises an input for receiving said packet-routing-information and at least a largest part of said routing-software, with said packet-signal comprising said at least largest part of said routing-software.

A first embodiment of the network-unit according to the invention is characterised in that said network-unit comprises a detector for detecting said at least largest part of said routing-software destined to be run via said processor for said calculating and for detecting said packet-routing-information destined to be inputted into said calculating.

A second embodiment of the network-unit according to the invention is characterised in that said network-unit comprises a further detector for detecting quality information, priority information and/or classification information destined to be further inputted into said calculating.

Of course, each one of both said detectors can be either a hardware detector or a software detector, and can form part of said processor, entirely, partly, or not at all.

The invention further also relates to a method for running routing-software via a processor in a network-unit for in dependence of at least network-routing-information stored in a memory of said network-unit and of packet-routing-information forming part of a packet signal calculating at least one route for said packet signal from said network-unit to a further network-unit.

The method according to the invention is characterised in that said method comprises the step of exchanging at least a largest part of said routing-software from said packet signal to said network-unit.

A first embodiment of the method according to the invention is characterised in that said method comprises the steps of detecting said at least largest part of said routing-software destined to be run via said processor for said calculating and of detecting said packet-routing-information destined to be inputted into said calculating.

A second embodiment of the method according to the invention is characterised in that said method comprises a step of further detecting quality information, priority information and/or classification information destined to be further inputted into said calculating.

The invention will be further explained at the hand of an embodiment described with respect to drawings, whereby
figure 1 discloses a packet signal according to the invention for use in the system according to the invention, and
figure 2 discloses a network-unit according to the invention for use in the system according to the invention.

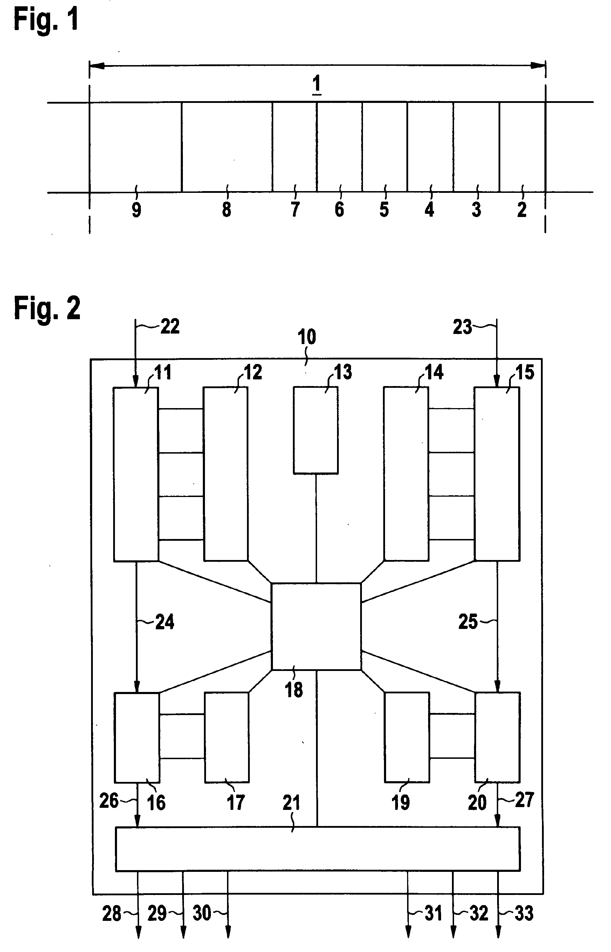

The packet signal 1 according to the invention as shown in figure 1 comprises a first field 2 at a first adress location, a second field 3 at a second address location, a third field 4 at a third address location, a fourth field 5 at a fourth address location, a fifth field 6 at a fifth address location, a sixth field 7 at a sixth address location, a seventh field 8 at a seventh address location, and an eighth field 9 at an eighth address location.

The network-unit 10 according to the invention as shown in figure 2 comprises a first input 22 coupled to an input of a first buffer 11, of which information in/outputs are coupled to information in/outputs of a first detector 12, and comprises a second input 23 coupled to an input of a second buffer 15, of which information in/outputs are coupled to information in/outputs of a second detector 14. An output of first buffer 11 is coupled via a connection 24 to an input of a third buffer 16, of which information in/outputs are coupled to information in/outputs of a first insertor 17, and an output of second buffer 15 is coupled via a connection 25 to an input of a fourth buffer 20, of which information in/outputs are coupled to information in/outputs of a second insertor 19. An output of third buffer 16 is coupled via a connection 26 to a first input of a switch 21, and an output of fourth buffer 20 is coupled via a connection 27 to a second input switch 21, which comprises six outputs 28-33 each to be coupled to for example an input of one of six further network-units. Network-unit 10 further comprises a processor coupled via control connections to a memory 13 and to first buffer 11, first detector 12, second buffer 15, second detector 14, third buffer 16, first insertor 17, fourth buffer 20, second insertor 19 and switch 21.

The network-unit 10 according to the invention as shown in figure 2 when receiving the packet signal 1 according to the invention as shown in figure 1 at for example first input 22 functions as follows. The packet signal 1 arrives via first input 22 at first buffer 11, in which packet signal 1 is buffered. Processor 18 is informed about this via the control connection, and in response via the control connection orders first detector 12 to start with a detection. First detector 12 detects for example first field 2 comprising for example 1000 bits indicating the start of packet signal 1 and identifying this packet signal 1 thereby indicating that it is a packet signal according to the invention due to comprising routing-software. This detecting is for example possible due to first field 2 starting with a unique bit word, that defines packet signal borders (cell delineation can be done in many different other ways), then comprising an identification bit word identifying this one packet signal 1, then having a code bit word saying that this packet signal comprises routing-software, and then comprising addresses at which the further fields in this packet signal 1 are located. First detector 12 further detects for example second field 3 comprising for example 1000 bits indicating packet-routing-information like an IP address of a further address defining for example a destination like a further network-unit. First detector 12 may further detect third field 4, fourth field 5 and fifth field 6, each comprising for example 1000 bits indicating quality information, priority information and classification information respectively. First detector 12 also detects seventh field 8 comprising for example 100.000 bits with routing-software, and possibly detects the content of eighth field 9 comprising for example 1.000.000 bits with data.

After at least a part of said detection, first detector 12 via the control connection informs processor 18, which in response to a detection of the code bit word of first field 2 will order first detector 12 and/or first buffer 11 to either make a copy of the packet-routing-information in second field 3 or to extract this packet-routing-information from second field 3, which packet-routing-information is temporarily stored in memory 13 via the control connection, and to either make a copy of the routing-software in seventh field 8 or to extract this routing-software from seventh field 8, which routing-software is temporarily stored in memory 13 via the control connection. Memory 13 further comprises for example network-routing-information.

After said packet-routing-information and said routing-software have been temporarily stored, processor 18 is informed via the control connection, and then will decide to run said routing-software, whereby said packet-routing-information and said network-routing-information are inputted. By running said routing-software, processor 18 calculates at least one new route for packet signal 1. Thereby, possibly, said identification bit word, said quality information, said priority information and/or said classification information may also be copied or extracted, stored and inputted.

After the calculation has been made, and at least one new route has been calculated, processor will control switch 21 via the control connection such that said packet signal 1 is sent to the destination (further network-unit) calculated. In case of said packet-routing-information, said routing-software, said identification bit word, said quality information, said priority information and/or said classification information being extracted, generally new packet-routing-information, new routing-software, a new identification bit word, new quality information, new priority information and/or new classification information will need to be inserted. When being equal to the old info, the new info is read from memory 13 and via processor 18 and first insertor 17 via the control connections inserted into packet signal 1 via third buffer 16. When not being equal to the old info, the new info needs to be calculated by processor 18, and then to be inserted as described above.

According to a first alternative, all routing-software is stored in packet signal 1, but network-unit 10 just needs a part of it. Then this part will be defined in for example first field 2 comprising for example 1000 bits indicating the start of packet signal 1 and identifying this packet signal 1 thereby indicating that it is a packet signal according to the invention from which just a part of the routing-software is to be used. Thereto, first field 2 comprises a part indicating word that defines the part of the routing-software to be used, for example by defining certain address ranges of seventh field 8.

After at least a part of said detection, first detector 12 via the control connection informs processor 18, which in response to a detection of the code bit word of first field 2 will order first detector 12 and/or first buffer 11 to either make a copy of the packet-routing-information in second field 3 or to extract this packet-routing-information from second field 3, which packet-routing-information is temporarily stored in memory 13 via the control connection, and to either make a copy of the part of the routing-software at said address ranges in seventh field 8 or to extract this part of the routing-software from seventh field 8, which part of the routing-software is temporarily stored in memory 13 via the control connection. Memory 13 further comprises for example network-routing-information.

After said packet-routing-information and said part of the routing-software have been temporarily stored, processor 18 is informed via the control connection, and then will decide to run said part of the routing-software, whereby said packet-routing-information and said network-routing-information are inputted. By running said part of the routing-software, processor 18 calculates at least one new route for packet signal 1. Thereby, possibly, said identification bit word, said quality information, said priority information and/or said classification information may also be copied or extracted, stored and inputted.

After the calculation has been made, and at least one new route has been calculated, processor will control switch 21 via the control connection such that said packet signal 1 is sent to the destination (further network-unit) calculated. In case of said packet-routing-information, said part of the routing-software, said identification bit word, said quality information, said priority information and/or said classification information being extracted, generally new packet-routing-information, a new part of the routing-software, a new identification bit word, new quality information, new priority information and/or new classification information will need to be inserted. When being equal to the old info, the new info is read from memory 13 and via processor 18 and first insertor 17 via the control connections inserted into packet signal 1 via third buffer 16. When not being equal to the old info, the new info needs to be calculated by processor 18, and then to be inserted as described above.

According to a second alternative, just a part of the routing-software is stored in packet signal 1, with a further part being stored in memory 13. Then this part will be defined in for example first field 2 comprising for example 1000 bits indicating the start of packet signal 1 and identifying this packet signal 1 thereby indicating that it is a packet signal according to the invention from which the routing-software is to be combined with further routing-software stored in memory 13 of network-unit 10. Thereto, first field 2 comprises a combination indicating word that defines the routing-software to be combined with the further routing-software, and/or an identification of this further routing software.

After at least a part of said detection, first detector 12 via the control connection informs processor 18, which in response to a detection of the code bit word of first field 2 will order first detector 12 and/or first buffer 11 to either make a copy of the packet-routing-information in second field 3 or to extract this packet-routing-information from second field 3, which packet-routing-information is temporarily stored in memory 13 via the control connection, and to either make a copy of the routing-software in seventh field 8 or to extract this routing-software from seventh field 8, which routing-software is temporarily stored in memory 13 via the control connection. Memory 13 further comprises said further routing-software and for example network-routing-information.

After said packet-routing-information and said part of the routing-software have been temporarily stored, processor 18 is informed via the control connection, and then will decide to combine both routing-software parts and to run the combination of the routing-software, whereby said packet-routing-information and said network-routing-information are inputted. By running said combination of the routing-software, processor 18 calculates at least one new route for packet signal 1. Thereby, possibly, said identification bit word, said quality information, said priority information and/or said classification information may also be copied or extracted, stored and inputted.

After the calculation has been made, and at least one new route has been calculated, processor will control switch 21 via the control connection such that said packet signal 1 is sent to the destination (further network-unit) calculated. In case of said packet-routing-information, said routing-software, said identification bit word, said quality information, said priority information and/or said classification information being extracted, generally new packet-routing-information, new routing-software, a new identification bit word, new quality information, new priority information and/or new classification information will need to be inserted. When being equal to the old info, the new info is read from memory 13 and via processor 18 and first insertor 17 via the control connections inserted into packet signal 1 via third buffer 16. When not being equal to the old info, the new info needs to be calculated by processor 18, and then to be inserted as described above.

According to a third alternative, the first and second alternative are being combined.

All embodiments are just embodiments and do not exclude other embodiments not shown and/or described. All alternatives are just alternatives and do not exclude other alternatives not shown and/or described. Each (part of an) embodiment and/or each (part of an) alternative can be combined with any other (part of an) embodiment and/or any other (part of an) alternative. Terms like "in response to K" and "in dependence of L" and "for doing M" do not exclude that there could be a further "in response to N" and a further "in dependence of O" and a further "for doing P" etc.

First buffer 11 and second buffer 15 and third buffer 16 and fourth buffer 20 are for example shift registers or further memories, like ROMs, RAMs, DPRAMs, etc. First detector 12 and second detector 14 are for example comparators or logical gates possibly with a storage capacity which could be realised via processor 18. First insertor 17 and second insertor 19 are comparators or logical gates possibly with a storage capacity which could be realised via processor 18.

The number of inputs can be changed (by also changing the number of inputs of switch 21 for example), the number of outputs can be changed (via switch 21 for example), instead of inputs and outputs there could be used/realised in/outputs functioning as inputs and/or outputs, two or more blocks can be integrated, each block can be divided into two or more subblocks, and each part shown in figure 2 can be 100% hardware, 100% software or a mixture of both, without departing from the scope of this invention. Therefore, generally, buffering, detecting, storing, running, calculating, inserting and switching should be regarded to be functionalities. Software can be divided into parts and software-parts can be combined by either identifying/defining these parts or by identifying/defining the addresses/ranges where the parts are to be found.

## Claims

1. System comprising at least one network-unit and a packet signal, with said network-unit comprising a processor and a memory for storing network-routing-information and with said packet signal comprising packet-routing-information, and with said system comprising routing-software to be run via said processor for in dependence of at least said network-routing-information and said packet-routing-information calculating at least one route for said packet signal from said network-unit to a further network-unit, **characterised in that** said packet-signal comprises at least a largest part of said routing-software, with said network-unit comprising an input for receiving said at least largest part and said packet-routing-information.

2. Packet signal for use in a system comprising at least one network-unit and said packet signal, with said network-unit comprising a processor and a memory for storing network-routing-information and with said packet signal comprising packet-routing-information, and with said system comprising routing-software to be run via said processor for in dependence of at least said network-routing-information and said packet-routing-information calculating at least one route for said packet signal from said network-unit to a further network-unit, **characterised in that** said packet-signal comprises at least a largest part of said routing-software, with said network-unit comprising an input for receiving said at least largest part and said packet-routing-information.

3. Packet signal according to claim 2, **characterised in that** said packet-routing-information is located at a first predefined location in said packet signal, with said at least largest part of said routing-software being located at a second predefined location in said packet signal.

4. Packet signal according to claim 3, **characterised in that** said packet signal further comprises quality information, priority information and/or classification information, each information being located at a further predefined location.

5. Network-unit for use in a system comprising said network-unit and a packet signal, with said network-unit comprising a processor and a memory for storing network-routing-information and with said packet signal comprising packet-routing-information, and with said system comprising routing-software to be run via said processor for in dependence of at least said network-routing-information and said packet-routing-information calculating at least one route for said packet signal from said network-unit to a further network-unit, **characterised in that** said network-unit comprises an input for receiving said packet-routing-information and at least a largest part of said routing-software, with said packet-signal comprising said at least largest part of said routing-software.

6. Network-unit according to claim 5, **characterised in that** said network-unit comprises a detector for detecting said at least largest part of said routing-software destined to be run via said processor for said calculating and for detecting said packet-routing-information destined to be inputted into said calculating.

7. Network-unit according to claim 6, **characterised in that** said network-unit comprises a further detector for detecting quality information, priority information and/or classification information destined to be further inputted into said calculating.

8. Method for running routing-software via a processor in a network-unit for in dependence of at least network-routing-information stored in a memory of said network-unit and of packet-routing-information forming part of a packet signal calculating at least one route for said packet signal from said network-unit to a further network-unit, **characterised in that** said method comprises the step of exchanging at least a largest part of said routing-software from said packet signal to said network-unit.

9. Method according to claim 8, **characterised in that** said method comprises the steps of detecting said at least largest part of said routing-software destined to be run via said processor for said calculating and of detecting said packet-routing-information destined to be inputted into said calculating.

10. Method according to claim 9, **characterised in that** said method comprises a step of further detecting quality information, priority information and/or classification information destined to be further inputted into said calculating.
